(19) Europäisches Patentamt
European Patent Office
Office européen des brevets

(11) **EP 1 529 249 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
***G05B 13/02*** *(2006.01)*     ***G06F 17/18*** *(2006.01)*

(21) Anmeldenummer: **03790663.3**

(22) Anmeldetag: **30.07.2003**

(86) Internationale Anmeldenummer:
**PCT/DE2003/002566**

(87) Internationale Veröffentlichungsnummer:
**WO 2004/021209 (11.03.2004 Gazette 2004/11)**

(54) **VERFAHREN UND ANORDNUNG ZUM ENTWURF EINES TECHNISCHEN SYSTEMS**

METHOD AND ARRANGEMENT FOR DESIGNING A TECHNICAL SYSTEM

PROCEDE ET ENSEMBLE PERMETTANT LA CONCEPTION D'UN SYSTEME TECHNIQUE

(84) Benannte Vertragsstaaten:
**DE FR GB**

(30) Priorität: **14.08.2002 DE 10237335**

(43) Veröffentlichungstag der Anmeldung:
**11.05.2005 Patentblatt 2005/19**

(73) Patentinhaber: **SIEMENS AKTIENGESELLSCHAFT**
**80333 München (DE)**

(72) Erfinder:
• **HILLERMEIER, Claus**
**83236 Übersee (DE)**
• **SOHR, Annelie**
**81929 München (DE)**

(56) Entgegenhaltungen:
**WO-A-00/34850     WO-A-00/65412**
**WO-A-01/07972     WO-A-99/66434**
**US-A- 6 064 916**

## Beschreibung

Die Erfindung betrifft ein Verfahren und eine Anordnung zum Entwurf eines technischen Systems.

WO 99/66434 offenbart ein Verfahren und eine Anordnung zum Entwurf eines technischen Systems.

Für den Entwurf eines komplexen technischen Systems ist es oftmals notwendig, dieses System bezüglich mehrerer, einander widersprechender Kriterien zu optimieren. Diese Kriterien beeinflussen Zielfunktionen des Systems, wie z.B. Herstellungskosten oder Wirkungsgrad. Darüber hinaus können mögliche Arbeitspunkte des Systems noch durch Nebenbedingungen eingeschränkt sein. Dies führt zu dem Problem, eine Menge an optimalen Arbeitspunkten für das System zu bestimmten, d.h. die Menge von möglichen Arbeitspunkten des System, bei denen es nicht möglich ist, diese Arbeitspunkte gleichzeitig bezüglich aller Kriterien weiter zu optimieren. Aus dieser Menge an optimalen Punkten kann sich dann ein Anwender unter Berücksichtigung von geheimen Kriterien oder Expertenwissen die für seine Anwendung am besten geeigneten Arbeitspunkte des Systems auswählen.

Aus [1] ist eine Wichtungsmethode zur Optimierung technischer Systeme bezüglich mehrerer Kriterien bekannt, bei der mit Hilfe von Skalierungsparametern Transformationen auf skalarwertige Optimierungsprobleme angewandt werden. Dieses Verfahren hat den Nachteil, dass es numerisch sehr aufwendig ist, da sehr viele skalarwertige Optimierungen durchgeführt werden müssen. Darüber hinaus erfordert die Auswahl und Variation der Skalierungsparameter eine Interaktion mit einem Benutzer und ist diesbezüglich nicht automatisierbar.

In [2] ist eine stochastische Methode zur Optimierung technischer Systeme bezüglich mehrerer Kriterien beschrieben, bei der eine stochastische Differentialgleichung zur Lösung des Optimierungsproblems verwendet wird. Dieses Verfahren hat den Nachteil, dass es numerisch sehr aufwendig ist, da eine Vielzahl an quadratischen Optimierungsproblemen gelöst werden muss. Ein weiterer Nachteil besteht darin, dass bei dieser Methode die einzelnen Zielfunktionen nicht gewichtet werden, wodurch dem Anwender wichtige Informationen zur Auswahl eines optimalen Punktes nicht zur Verfügung stehen.

Aus [3] ist eine Homotopiemethode zur Optimierung technischer Systeme bezüglich mehrerer Kriterien bekannt, bei der neben Gewichtungsfaktoren für die Zielfunktionen noch Lagrange-Multiplikatoren für die Berücksichtigung von Nebenbedingungen verwendet werden. Der Nachteil dieses Verfahren besteht darin, dass eine Interaktion mit dem Benutzer nötig ist und dieses Verfahren diesbezüglich nicht automatisiert werden kann.

Somit liegt der Erfindung die **Aufgabe** zugrunde, ein automatisiertes und numerisch effizientes Verfahren zum Entwurf eines technischen Systems zu schaffen.

Diese Aufgabe wird gemäß den Merkmalen der unabhängigen Patentansprüche gelöst. Weiterbildungen der Erfindung ergeben sich auch aus den abhängigen Patentansprüchen.

Bei dem erfindungsgemäßen Verfahren zum Entwurf eines technischen Systems wird das technische System durch eine vorgegebene Menge von Zielfunktionen, die von Parametern abhängen, modelliert. Dabei wird jede einzelne Zielfunktion mit einem Gewichtungsfaktor gewichtet. Das Verfahren löst ein Gleichungssystem umfassend die Parameter und die Gewichtungsfaktoren als Variablen in einem Variablenraum, wobei Lösungen des Gleichungssystems Arbeitspunkte eines Lösungsraums im Variablenraum bilden. Bei dem erfindungsgemäßen Verfahren werden die Arbeitspunkte mittels eines Prädiktor-Korrektor-Verfahrens bestimmt, bei dem ausgehend von einem ersten Arbeitspunkt ein Prädiktor, der mittels einer stochastischen Größe erzeugt wird, im Variablenraum bestimmt wird und anschließend in einem Korrektorschritt ein zweiter Arbeitspunkt ermittelt wird. Die ermittelten Arbeitspunkte werden dabei zum Entwurf des technischen Systems eingesetzt. Bei dem Entwurf des technischen Systems kann es sich um einen Neuentwurf oder um eine Veränderung bzw. Anpassung eines bereits bestehenden technischen Systems handeln.

Ein Vorteil der Erfindung besteht darin, dass das Verfahren durch die Erzeugung des Prädiktors mittels einer stochastischen Größe automatisiert wird und somit kein Eingriff des Benutzers mehr erforderlich ist. Durch die Kopplung des numerischen Prädiktor-Korrektor-Verfahrens mit stochastischen Methoden wird ein effizienter Einsatz der Rechner-Ressourcen zur Berechnung von Arbeitspunkten eines technischen Systems gewährleistet.

In einer vorteilhaften Ausgestaltung der Erfindung wird der Prädiktor mittels Zufallszahlen vorgegeben, so dass insbesondere beim Ablauf des Verfahrens ein Zufallszahlengenerator eingesetzt werden kann und somit auf einfache Weise die Automatisierung des Verfahrens gewährleistet ist.

In einer weiteren besonders vorteilhaften Ausgestaltung der Erfindung sind die Zufallszahlen normalverteilt. Hierdurch wird erreicht, dass die Trajektorie von Arbeitspunkten, die sich im Lösungsraum beim Ablauf des Verfahrens bildet, im gesamten Lösungsraum eine Gleichverteilung und somit gute Abdeckung aller möglichen Arbeitspunkte gewährleistet. Durch die Verwendung von normalverteilten Zufallszahlen kann mit dem erfindungsgemäßen Verfahren insbesondere eine Brownsche Bewegung auf dem Lösungsraum modelliert werden.

Vorzugsweise sind die Arbeitspunkte, die durch das erfindungsgemäße Verfahren ermittelt werden, sog. pareto-optimale Punkte, die in Bezug auf alle Zielfunktionen nicht mehr weiter optimierbar sind. Insbesondere werden bei dem erfindungsgemäßen Verfahren als Arbeitspunkte die Punkte mit positiven Gewichtungsfaktoren im Lösungsraum ausgewählt.

In einer weiteren vorteilhaften Ausführungsform der Erfindung müssen die Arbeitspunkte ferner eine oder mehrere Nebenbedingungen erfüllen, wobei die oder jede Nebenbedingung durch eine weitere Variable des Gleichungssystems im Variablenraum repräsentiert wird. Die Nebenbedingungen können dabei Gleichheitsnebenbedingungen und/oder Ungleichheitsnebenbedingungen sein. Bei Ungleichheitsnebenbedingungen wird vorzugsweise eine Schlupfvariable eingeführt, mit der die Ungleichheitsnebenbedingungen in Gleichheitsnebenbedingungen umgeformt werden können. Die Verwendung von Schlupfvariablen wird in der detaillierten Beschreibung eines Ausführungsbeispiels noch näher erläutert.

Vorzugsweise ist der Lösungsraum der Arbeitspunkte eine Mannigfaltigkeit, insbesondere eine Untermannigfaltigkeit im Variablenraum. In [3] ist erläutert, unter welchen Voraussetzungen der Lösungsraum eine solche Mannigfaltigkeit bildet.

Da insbesondere beim Start des erfindungsgemäßen Verfahrens zunächst ein erster Arbeitspunkt vorliegt, wird in einer besonderen Ausgestaltung der Erfindung dieser erste gültige Arbeitspunkt durch eine Wichtungsmethode bestimmt, wobei die Verwendung von Wichtungsmethoden bereits aus dem Stand der Technik bekannt ist (siehe [1]).

Bei dem in der Erfindung verwendeten Prädiktor-Korrektor-Verfahren wird vorzugsweise in dem ersten Arbeitspunkt eine Tangentialebene an den Lösungsraum bestimmt, und anschließend wird in dieser Tangentialebene der Prädiktor festgelegt.

In einer Weiterbildung des erfindungsgemäßen Verfahrens wird beim Auftreten eines negativen Prädiktors mit einem oder mehreren negativen Gewichtungsfaktoren ein neuer Prädiktor durch eine Reflexion an einer Unterebene des Lösungsraums der gültigen Arbeitspunkte bestimmt. Hierdurch können neue Regionen von gültigen Arbeitspunkten ermittelt werden, wobei diese Arbeitspunkte für den Anwender hinsichtlich von geheimen Zusatzkriterien oder seinem Expertenwissen von besonderer Relevanz sein können.

In einer bevorzugten Ausführungsform der Erfindung wird bei dem Reflexionsschritt ein Schnittpunkt der Trajektorie, die zwischen dem ersten Arbeitspunkt und dem negativen Prädiktor verläuft, mit einer Unterebene des Lösungsraums bestimmt. Dann wird der Tangentialanteil des von dem Schnittpunkt und dem negativen Prädiktor aufgespannten Vektors an die betreffende Unterebene des Lösungsraums ermittelt, wobei in den Punkten der Unterebene diejenigen Gewichtungsfaktoren, die für den negativen Prädiktor negativ waren, nunmehr gleich Null sind. Anschließend wird der zu diesem Tangentialanteil gehörige Normalanteil des von dem Schnittpunkt und dem negativen Prädiktor aufgespannten Vektors bestimmt. Schließlich wird der neue Prädiktor durch zweimalige Subtraktion des Normalanteils vom negativen Prädiktor ermittelt.

Für das in der Erfindung verwendete Korrektorverfahren wird vorzugsweise ein aus dem Stand der Technik bekanntes Newton-Verfahren eingesetzt, welches numerisch leicht umsetzbar ist.

Vorzugsweise werden die Arbeitspunkte durch Iterationen des Prädiktor-Korrektor-Verfahrens bestimmt, wobei in einem Iterationsschritt als erster Arbeitspunkt des Prädiktor-Korrektor-Verfahrens der zweite Arbeitspunkt des vörangegangenen Iterationsschritts verwendet wird. Das Verfahren wird dabei beispielsweise durch eine Abbruchbedingung beendet. Die Abbruchbedingung ist in einer vorteilhaften Ausgestaltung der Erfindung dann erfüllt, wenn eine vorgegebene Anzahl von Arbeitspunkten ermittelt worden ist und/oder ein vorgegebenes Zeitlimit erreicht worden ist.

Neben dem oben beschriebenen Verfahren zum Entwurf eines technischen Systems betrifft die Erfindung auch eine Anordnung zum Entwurf eines technischen Systems, mit der das oben beschriebene Verfahren durchführbar ist. Insbesondere umfasst das Verfahren eine Prozessoreinheit, mit der es ermöglicht wird, dass der Prädiktor mittels einer stochastischen Größe erzeugbar ist.

Vorzugsweise umfasst die Anordnung einen Zufallszahlengenerator zur Erzeugung von Zufallszahlen, welche die stochastische Größe darstellen.

Auch kann die Erfindung oder jede vorstehend beschriebene Weiterbildung durch ein Computerprogrammerzeugnis realisiert sein, welches ein Speichermedium aufweist, auf welchem ein Computerprogramm gespeichert ist, das auf einem Rechner ablaufbar ist und die Erfindung ausführt.

Ausführungsbeispiele der Erfindung werden nachfolgend anhand der Zeichnungen dargestellt und erläutert.

Es zeigen

Fig.1    ein Ablaufdiagramm des erfindungsgemäßen Verfahrens zum Entwurf eines technischen Systems;

Fig.2    eine Skizze, die das in der Erfindung verwendete Prädiktor-Korrektor-Verfahren veranschaulicht;

Fig.3    eine Skizze, welche das in einer Abwandlung der Erfindung verwendete Reflexionsverfahren veranschaulicht und

Fig. 4    eine Prozessoreinheit zur Durchführung des erfindungsgemäßen Verfahrens.

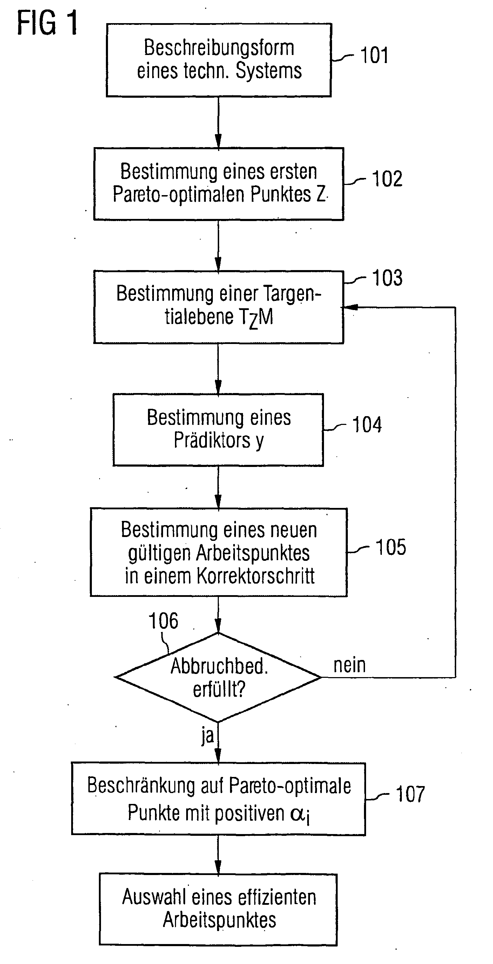

In **Fig.1** ist ein Ablaufdiagramm des erfindungsgemäßen Verfahrens zum Entwurf eines technischen Systems gezeigt.

Zuerst wird im Schritt 101 eine Beschreibungsform des technischen Systems gewählt. Diese Beschreibungsform umfasst eine vorgegebene Anzahl k von Zielfunktionen $\underline{f}=(f_1,...,f_k)$, wobei die Zielfunktionen jeweils von n vorgegebenen Parametern $x_1$ bis $x_n$ des technischen Systems abhängen. Bei den Zielfunktionen handelt es sich beispielsweise um die Investitionskosten $f_1$ und den Wirkungsgrad $f_2$ des technischen Systems. Die Zielfunktionen werden in diesem Fall durch folgende Gleichung beschrieben

$$\underline{f}(\underline{x}) = \begin{pmatrix} f_1(\underline{x}) \\ f_2(\underline{x}) \end{pmatrix} = \begin{pmatrix} Investitionskosten(\underline{x}) \\ -Wirkungsgrad(\underline{x}) \end{pmatrix}$$

mit $\underline{x}=(x_1,...,x_n)$.

Bei den Parametern $x_1$ bis $x_n$ kann es sich um Auslegungsparameter oder Betriebsparameter des technischen Systems handeln.

Durch das erfindungsgemäße Verfahren werden die gültigen Arbeitspunkte, die zum Entwurf des technischen Systems eingesetzt werden, durch die Optimierung der Zielfunktionen hinsichtlich der Parameter bestimmt, wobei sich nicht alle Zielfunktionen $f_1$ bis $f_k$ gleichzeitig optimieren lassen, da die Optimierungskriterien i.a. miteinander in Konkurrenz stehen.

Das technische System ist in den gültigen Arbeitspunkten ferner durch eine vorgegebene Anzahl m an Nebenbedingungen $\underline{h}=(h_1(\underline{x})...,h_m(\underline{x}))$ beschränkt, die sich durch folgende Gleichung ausdrücken lassen:

$$\underline{h}(\underline{x}) = \underline{0}$$

wobei $\underline{0}=(0,...,0)$ einen Nullvektor darstellt. Es handelt sich hierbei um eine Gleichheitsnebenbedingung, wobei alternativ auch eine Ungleichheitsnebenbedingung in Betracht kommen kann. Eine solche Ungleichheitsbedingung lautet beispielsweise:

$$\underline{h}(\underline{x}) < \underline{0} \qquad oder \qquad \underline{h}(\underline{x}) > \underline{0} \ .$$

Zur Lösung des Optimierungsproblems mit Ungleichheitsnebenbedingungen werden eine Anzahl m von Schlupfvariablen $s=(s_1,...,s_m)$ eingeführt, durch welche die Ungleichheitsnebenbedingungen in folgende Gleichheitsnebenbedingungen umgeformt werden können:

$$\underline{h}(\underline{x}) + \underline{s} = \underline{0} \qquad oder \qquad \underline{h}(\underline{x}) - \underline{s} = \underline{0} \ .$$

Bei dem in der vorliegenden Ausführungsform der Erfindung beschriebenen Optimierungsverfahren sind die gültigen Arbeitspunkte sog. pareto-optimale Punkte, welche folgende Bedingung erfüllen:

$$\min_{\underline{x} \in R} \left\{ \underline{f}(\underline{x}) \right\}, R = \left\{ x \in \Re^n \mid \underline{h}(\underline{x}) = 0 \right\}$$

Es lässt sich zeigen, dass die Lösungen dieses Optimierungsproblems die Lösungen des folgenden nichtlinearen Gleichungssystems sind:

$$F(\underline{x},\underline{\lambda},\underline{\alpha}) = \begin{pmatrix} \sum_{i=1}^{k} \alpha_i \cdot \nabla f_i(\underline{x}) + \sum_{j=1}^{m} \lambda_j \cdot \nabla h_j(\underline{x}) \\ \underline{h}(\underline{x}) \\ \sum_{i=1}^{k} \alpha_i - 1 \end{pmatrix} = \underline{0} \quad .$$

Hierbei werden die Nebenbedingungen durch die Lagrange-Multiplikatoren $\underline{\lambda}=(\lambda_1,...,\lambda_m)$ berücksichtigt, und die Zielfunktionen $f_i$ werden mit Gewichtungsfaktoren $\alpha_i$ gewichtet, wobei zu beachten ist, dass die Summe aller Gewichtungsfaktoren auf eins normiert ist, d.h. $\sum_{i=1}^{k} \alpha_i - 1 = 0$. Insbesondere können dabei die einzelnen Gewichtungsfaktoren $\alpha_i$ auch negativ oder gleich null sein. Die Lösungen des Optimierungsproblems sind somit Vektoren ($\underline{x},\underline{\lambda},\underline{\alpha}$)im (n+m+k)-dimensionalen Variablenraum des obigen Gleichungssystems.

Wie in [3] gezeigt, beschreiben die Lösungen dieses Gleichungssystems unter bestimmten Voraussetzungen eine (k-1)-dimensionale Untermannigfaltigkeit M im Variablenraum.

Die nachfolgend beschriebenen numerischen Schritte zur Bestimmung von gültigen Arbeitspunkten beruhen im wesentlichen auf dem in [3] beschriebenen Homotopie-Verfahren, bei dem ein Prädiktor-Korrektor-Verfahren zur Bestimmung von pareto-optimalen Punkten verwendet wird.

In dem Schritt 102 wird ausgehend von der Beschreibungsform 101 des technischen Systems ein erster pareto-optimaler Punkt z mit einem Standardverfahren, wie z.B. der Wichtungsmethode, bestimmt.

In diesem ersten pareto-optimalen Punkt wird im nächsten Schritt 103 eine (k-1)-dimensionale Tangentialebene $T_zM$ an die Mannigfaltigkeit M der gültigen Arbeitspunkte im Punkt z bestimmt. Dazu wird eine Jacobi-Matrix des Gleichungssystems F in dem Punkt z einer QR-Faktorisierung unterworfen. Daraus wird dann eine Orthonormalbasis { $\mathbf{q}_1...\mathbf{q}_{k-1}$ } bestimmt, welche die Tangentialebene aufspannt. Die hierbei durchgeführten einzelnen numerischen Schritte sind detailliert in [3] beschrieben.

In dem nächsten Schritt 104 wird in dieser Tangentialebene ein Prädiktor y bestimmt, wobei der Prädiktor - im Gegensatz zu dem in [3] beschriebenen Homotopieverfahren - mittels eines normalverteilten Zufallszahlenvektors b der Dimension k-1 in der Tangentialebene erzeugt wird. Der Prädiktor y hat dabei folgende Form:

$$y = z + (\mathbf{q}_1...\mathbf{q}_{k-1})b$$

Durch die Verwendung eines solchen Zufallszahlenvektors kann eine Brownsche Bewegung auf der Untermannigfaltigkeit M modelliert werden, wobei sich die Brownsche Bewegung näherungsweise wie folgt darstellen lässt:

$$dZ_t = \varepsilon P(Z_t)dB_t$$

wobei
$P(z)$     eine Projektionsmatrix auf die Tangentialebene $T_zM$ im gültigen Arbeitspunkt z ist,
$\varepsilon$     ein Skalierungsfaktor ist, und
$B_t, t \in \mathfrak{R}_0^+$     eine Brownsche Bewegung im Variablenraum ist.

Zur Modellierung dieser Bewegung wird für b die k-l-dimensionale Normalverteilung $N(0_{k-1}, t_\Delta \varepsilon I_{k-1})$ gewählt, wobei der Mittelwert $0_{k-1}$ der (k-1)-dimensionale Nullvektor ist und die Varianz die (k-1)-dimensionale Identitätsmatrix $I_{k-1}$ multipliziert mit einer Schrittweite $t_\Delta$ der Brownschen Bewegung und dem Skalierungsfaktor $\varepsilon$ ist.

Alternativ kann der Prädiktor dadurch bestimmt werden, dass zunächst im (m+n+k)-dimensionalen Variablenraum ein normalverteilter Zufallszahlenvektor bestimmt wird und dieser anschließend in die (k-l)-dimensionale Tangentialebene $T_zM$ projiziert wird.

Danach wird im Schritt 105 der Prädiktor mit Hilfe eines Korrektorverfahrens, das beispielsweise ein numerisches Newton-Verfahren ist, auf die Mannigfaltigkeit der pareto-optimalen Punkte projiziert. Auf diese Weise wird ein neuer gültiger Arbeitspunkt auf der Mannigfaltigkeit der pareto-optimalen Punkte ermittelt.

Die Schritte 103, 104 und 105 werden iterativ wiederholt, wobei als Ausgangspunkt zur Berechnung eines neuen gültigen Arbeitspunktes der im vorangegangenen Iterationsschritt bestimmte Arbeitspunkt verwendet wird.

Im Schritt 106 wird überprüft ,ob ein Abbruchkriterium erfüllt ist, d.h. ob z.B. eine vorgegebene Anzahl von Iterationen durchgeführt oder ein vorgegebenes Zeitlimit erreicht worden ist. Ist dies nicht der Fall, so wird zu Schritt 103 zurückgegangen und die nächste Iteration durchgeführt. Dies wird solange fortgesetzt, bis das Abbruchkriterium erfüllt ist.

Ist das Abbruchkriterium in Schritt 106 erfüllt, so wird in einem nächsten Schritt 107 die Menge der bestimmten pareto-optimalen Punkte auf diejenigen Punkte beschränkt, bei denen die Gewichtungsfaktoren $\alpha_i$ positiv sind.

Aus diesen pareto-optimalen Punkten wird in einem letzten Schritt 108 durch den Benutzer ein für seine Anforderungen effizienter Arbeitspunkt des technischen Systems ausgewählt und das technische System mit diesem effizienten Arbeitspunkt entworfen.

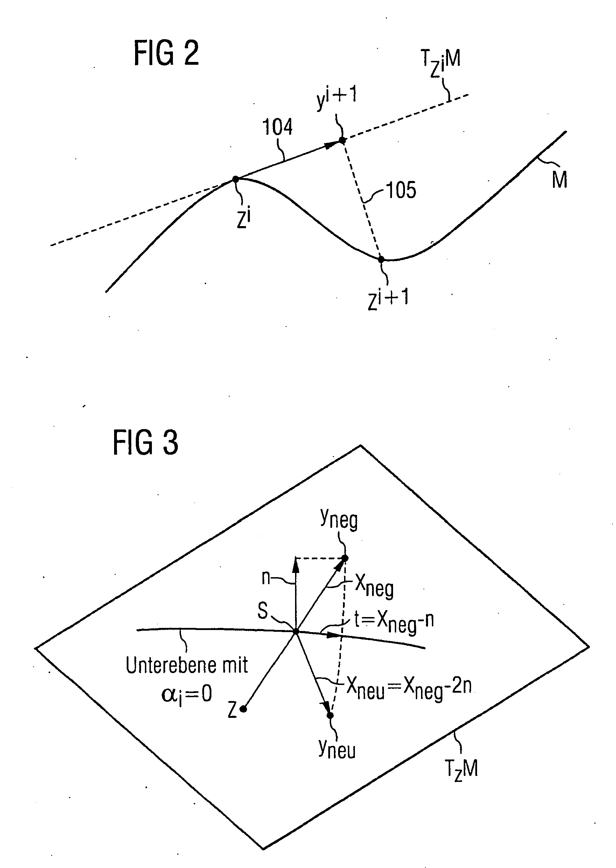

Figur 2 zeigt eine zweidimensionale grafische Darstellung des in der Erfindung verwendeten Prädiktor-Korrektor-Verfahrens. In Figur 2 bezeichnet $z^i$ einen pareto-optimalen Punkt auf der Untermannigfaltigkeit M, wobei dieser Punkt im i-ten Iterationsschritt des Verfahrens erhalten wurde. Zur Bestimmung eines neuen pareto-optimalen Punktes wird zunächst die Tangentialebene $T_{z_i}M$ an die Untermannigfaltigkeit M im Punkt $z^i$ bestimmt. Die Tangentialebene ist in Figur 2 mit gestrichelten Linien angedeutet. In dem nächsten Schritt 104 wird dann unter Verwendung von normalverteilten Zufallszahlen in der Tangentialebene $T_{z_i}M$ ein Prädiktorpunkt $y^{i+1}$ bestimmt. In dem anschließenden Korrektorschritt 105, der beispielsweise ein Newton-Verfahren sein kann, wird dann der neue pareto-optimale Punkt $z^{i+1}$ ermittelt. Das Verfahren wird dann fortgesetzt, wobei als Ausgangspunkt für den erneuten Prädiktorschritt der pareto-optimale Punkt $z^{i+1}$ verwendet wird.

Figur 3 betrifft eine Abwandlung des erfindungsgemäßen Verfahrens, wobei beim Auftreten von Prädiktoren mit negativen Gewichtungsfaktoren $\alpha_i$ eine Reflexion zur Ermittlung eines neuen Prädiktors mit positiven $\alpha_i$ durchgeführt wird. Figur 3 zeigt in einer dreidimensionalen Darstellung die Durchführung dieses Projektionsschrittes.

In Figur 3 ist ein Fall gezeigt, bei dem ausgehend von einem pareto-optimalen Punkt z ein Prädiktor $y_{neg}$ ermittelt wird, der ein negatives $\alpha_i$ aufweist. Dies wird grafisch dadurch veranschaulicht, dass die Strecke zwischen dem Punkt z und dem Punkt y die Tangentialebene $T_ZM$ im Punkt S durchstößt. Der Punkt S liegt dabei wiederum auf einer Unterebene der Tangentialebene $T_ZM$, für deren Punkte die Koordinate $\alpha_i$ den Wert Null aufweist. Zur Durchführung der Reflexion wird zunächst der Schnittpunkt S bestimmt. Dies kann unter der Verwendung eines Projektionsoperators erfolgen, der die $\alpha_i$-Komponente aus einer Parameterdarstellung der durch die Punkte z und y verlaufenden Geraden herausprojiziert. Nach Bestimmung des Punktes S kann nunmehr der zwischen S und y verlaufende Vektor $x_{neg}$ ermittelt werden. Dieser Vektor wird dann in den Tangentialanteil t an die Unterebene und in einen Normalanteil n zerlegt. Für den Tangentialanteil gilt somit $t = x_{neg} - n$. Anschließend wird der Reflexionsschritt durchgeführt, wobei der neue reflektierte Vektor $x_{neu}$ den gleichen Tangentialanteil t wie der alte Vektor $x_{neg}$ aufweist und der Normalanteil dem Normalanteil n des alten Vektors $x_{neg}$ mit umgekehrten Vorzeichen entspricht. Der neue Vektor lautet somit $x_{neu} = t - n = (x_{neg} - n) - n = x_{neg} - 2n$. Es ergibt sich somit ein neuer Prädiktor $y_{neu}$, der an der Tangentialebene $T_ZM$ reflektiert wurde. Für den neuen Prädiktorpunkt $y_{neu}$ gilt $y_{neu} = S + x_{neu}$. Die oben beschriebene Reflexionsmethode steigert die numerische Effizienz des Verfahrens, da die Erzeugung.von Punkten mit negativen Gewichtungsfaktoren $\alpha_i$ vermieden wird und damit die rechentechnischen Ressourcen effizienter genutzt werden.

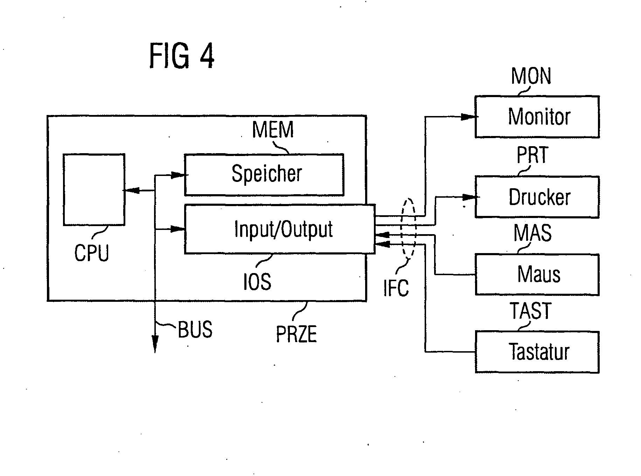

In **Fig.4** ist eine Prozessoreinheit PRZE zur Durchführung des erfindungsgemäßen Verfahrens dargestellt. Die Prozessoreinheit PRZE umfasst einen Prozessor CPU, einen Speicher MEM und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:

[1] C. Hillermeier: "Nonlinear Multiobjective Optimization: A Generalized Homotopy Approach",Kapitel 3.2, Birkhäuser Verlag, 2001

[2] C. Hillermeier: "Nonlinear Multiobjective Optimization: A Generalized Homotopy Approach",Kapitel 3.3, Birkhäuser Verlag, 2001

[3] C. Hillermeier: "A Generalized Homotopy Approach to Multiobjective Optimization", Journal of Optimization Theory and Application, Vol. 110/3, pp. 557 - 583, Plenum Press, New York, 2001

**Patentansprüche**

1. Verfahren zum Entwurf eines technischen Systems,

   - bei dem das technische System eine vorgegebene Menge von Zielfunktionen, die von Parametern abhängen, umfasst;
   - bei dem jede einzelne Zielfunktion mit einem Gewichtungsfaktor gewichtet wird;
   - bei dem ein Gleichungssystem umfassend die Parameter und die Gewichtungsfaktoren als Variablen in einem Variablenraum gelöst wird;
   - bei dem die Lösungen des Gleichungssystems Arbeitspunkte eines Lösungsraums im Variablenraum bilden;
   - bei dem die Arbeitspunkte mittels eines Prädiktor-Korrektor-Verfahrens bestimmt werden, bei dem ausgehend von einem ersten Arbeitspunkt ein Prädiktor, der mittels einer stochastischen Größe erzeugt wird, im Variablenraum bestimmt wird und anschließend in einem Korrektorschritt ein zweiter Arbeitspunkt ermittelt wird;
   - bei dem die Arbeitspunkte zum Entwurf des technischen Systems eingesetzt werden.

2. Verfahren nach einem der vorhergehenden Ansprüche, bei dem der Prädiktor mittels Zufallszahlen bestimmt wird.

3. Verfahren nach einem der vorhergehenden Ansprüche, bei dem die Zufallszahlen normalverteilt sind.

4. Verfahren nach einem der vorhergehenden Ansprüche, bei dem die stochastische Größe ein stochastischer Prozess $Z_t$ ist, der folgende Gleichung erfüllt:

$$dZ_t = \varepsilon P(Z_t) dB_t$$

   wobei

   $P(z)$ eine Projektionsmatrix auf den Tangentialraum des Lösungsraums im gültigen Arbeitspunkt $z$ ist,
   $\varepsilon$ ein Skalierungsfaktor ist, und

   $B_t, t \in \mathfrak{R}_0^+$ eine Brownsche Bewegung im Variablenraum ist.

5. Verfahren nach einem der vorhergehenden Ansprüche, bei dem als Arbeitspunkte pareto-optimale Punkte ermittelt werden.

6. Verfahren nach einem der vorhergehenden Ansprüche, bei dem die Arbeitspunkte die Punkte mit positiven Gewichtungsfaktoren im Lösungsraum sind.

7. Verfahren nach einem der vorhergehenden Ansprüche, bei dem die Arbeitspunkte eine oder mehrere Nebenbedingungen erfüllen, wobei die oder jede Nebenbedingung durch eine weitere Variable des Gleichungssystems im Variablenraum repräsentiert wird.

8. Verfahren nach Anspruch 7, bei dem die Nebenbedingungen Gleichheitsnebenbedingungen und/oder Ungleichheitsnebenbedingungen sind.

9. Verfahren nach Anspruch 8, bei dem Ungleichheitsnebenbedingungen mittels einer Schlupfvariable in Gleichheitsnebenbedingungen umgeformt werden.

10. Verfahren nach einem der vorhergehenden Ansprüche, bei dem der Lösungsraum eine Mannigfaltigkeit, insbesondere eine Untermannigfaltigkeit im Variablenraum ist.

**11.** Verfahren nach einem der vorhergehenden Ansprüche, bei dem der erste Arbeitspunkt durch eine Wichtungsmethode bestimmt wird.

**12.** Verfahren nach einem der vorhergehenden Ansprüche, bei dem in dem ersten Arbeitspunkt eine Tangentialebene an den Lösungsraum bestimmt wird und in dieser Tangentialebene der Prädiktor festgelegt wird.

**13.** Verfahren nach einem der vorhergehenden Ansprüche, bei dem beim Auftreten eines negativen Prädiktors mit einem oder mehreren negativen Gewichtungsfaktoren ein neuer Prädiktor durch eine Reflexion an einer Unterebene des Lösungsraums der Arbeitspunkte bestimmt wird.

**14.** Verfahren nach Anspruch 13, bei dem

- ein Schnittpunkt der Trajektorie, die zwischen dem ersten Arbeitspunkt und dem negativen Prädiktor verläuft, mit der Unterebene des Lösungsraums bestimmt wird;
- der Tangentialanteil des von dem Schnittpunkt und dem negativen Prädiktor aufgespannten Vektors an einer Unterebene des Lösungsraums ermittelt wird, wobei in den Punkten der Unterebene diejenigen Gewichtungsfaktoren, die für den negativen Prädiktor negativ waren, gleich Null sind;
- der zum Tangentialanteil gehörige Normalanteil des von dem Schnittpunkt und dem negativen Prädiktor aufgespannten Vektors bestimmt wird;
- der neue Prädiktor durch zweimalige Subtraktion des Normalanteils vom negativen Prädiktor bestimmt wird.

**15.** Verfahren nach einem der vorhergehenden Ansprüche, bei dem das Korrektorverfahren ein Newton-Verfahren ist.

**16.** Verfahren nach einem der vorhergehenden Ansprüche, bei dem die Arbeitspunkte durch Iterationen des Prädiktor-Korrektor-Verfahrens bestimmt werden, wobei in einem Iterationsschritt als erster Arbeitspunkt des Prädiktor-Korrektor-Verfahrens der zweite Arbeitspunkt des vorangegangenen Iterationsschritts verwendet wird.

**17.** Verfahren nach Anspruch 16, wobei das Verfahren durch eine Abbruchbedingung beendet wird.

**18.** Verfahren nach Anspruch 17, bei dem die Abbruchbedingung erfüllt ist, wenn eine vorgegebene Anzahl von Arbeitspunkten ermittelt worden ist und/oder ein vorgegebenes Zeitlimit erreicht worden ist.

**19.** Anordnung zum Entwurf eines technischen Systems zur Durchführung eines Verfahrens nach einem der vorhergehenden Ansprüche, mit einer Prozessoreinheit, die derart eingerichtet ist, dass

- das technische System eine vorgebbare Menge von Zielfunktionen, die von Parametern abhängen, umfasst;
- jede einzelne Zielfunktion mit einem Gewichtungsfaktor gewichtet ist;
- ein Gleichungssystem umfassend die Parameter und die Gewichtungsfaktoren als Variablen in einem Variablenraum gelöst werden kann;
- die Lösungen des Gleichungssystems Arbeitspunkte eines Lösungsraums im Variablenraum bilden;
- die Arbeitspunkte mittels eines Prädiktor-Korrektor-Verfahrens bestimmbar sind, bei dem ausgehend von einem ersten Arbeitspunkt ein Prädiktor, der mittels einer stochastischen Größe erzeugt wird, im Variablenraum bestimmt wird und anschließend in einem Korrektorschritt ein zweiter Arbeitspunkt ermittelt wird;
- die Arbeitspunkte zum Entwurf des technischen Systems einsetzbar sind.

**20.** Anordnung nach Anspruch 19, umfassend einen Zufallszahlengenerator zur Erzeugung der stochastischen Größe.

**21.** Computerprogrammerzeugnis, welches ein Speichermedium aufweist, auf welchem ein Computerprogramm gespeichert ist, das auf einem Rechner ablaufbar ist und mit dem das Verfahren nach einem der Ansprüche 1 bis 18 durchführbar ist.

**Claims**

**1.** Method for designing a technical system,

- wherein the technical system comprises a predetermined set of target functions which are dependent on parameters;

- wherein each individual target function is weighted with a weighting factor;
- wherein an equation system comprising the parameters and the weighting factors as variables is solved in a variable space;
- wherein the solutions of the equation system form operating points of a solution space in the variable space;
- wherein the operating points are determined by means of a predictor-corrector method in which, starting from a first operating point, a predictor which is generated by means of a stochastic variable is determined in the variable space and subsequently, in a corrector step, a second operating point is determined;
- wherein the operating points are used for designing the technical system.

2. Method according to one of the preceding claims, wherein the predictor is determined by means of random numbers.

3. Method according to one of the preceding claims, wherein the random numbers are normally distributed.

4. Method according to one of the preceding claims, wherein the stochastic variable is a stochastic process $Z_t$ which satisfies the following equation:

$$dZ_t = \varepsilon P(Z_t)dB_t$$

where

$P(z)$ is a projection matrix onto the tangential space of the solution space in the valid operating point $z$,
$\varepsilon$ is a scaling factor, and

$B_t, t \in \Re_0^+$ is a Brown movement in the variable space.

5. Method according to one of the preceding claims, wherein pareto-optimal points are determined as the operating points.

6. Method according to one of the preceding claims, wherein the operating points are the points with positive weighting factors in the solution space.

7. Method according to one of the preceding claims, wherein the operating points satisfy one or more auxiliary conditions, with the or each auxiliary condition being represented by a further variable of the equation system in the variable space.

8. Method according to claim 7, wherein the auxiliary conditions are equality auxiliary conditions and/or inequality auxiliary conditions.

9. Method according to claim 8, wherein inequality auxiliary conditions are transformed into equality auxiliary conditions by means of a slack variable.

10. Method according to one of the preceding claims, wherein the solution space is a manifold, in particular a submanifold in the variable space.

11. Method according to one of the preceding claims, wherein the first operating point is determined by means of a weighting method.

12. Method according to one of the preceding claims, wherein in the first operating point a tangential plane to the solution space is determined and the predictor is specified in said tangential plane.

13. Method according to one of the preceding claims, wherein if a negative predictor with one or more negative weighting factors occurs, a new predictor is determined by means of a reflection at a subplane of the solution space of the operating points.

14. Method according to claim 13, wherein

EP 1 529 249 B1

- a point of intersection of the trajectory which runs between the first operating point and the negative predictor with the subplane of the solution space is determined;
- the tangential component of the vector spanned by the point of intersection and the negative predictor is determined at a subplane of the solution space, with those weighting factors which were negative for the negative predictor in the points of the subplane now being equal to zero;
- the normal component, associated with the tangential component, of the vector spanned by the point of intersection and the negative predictor is determined;
- the new predictor is determined by two times subtraction of the normal component from the negative predictor.

**15.** Method according to one of the preceding claims, wherein the corrector method is a Newton method.

**16.** Method according to one of the preceding claims, wherein the operating points are determined by means of iterations of the predictor-corrector method, with the second operating point of the preceding iteration step being used in an iteration step as the first operating point of the predictor-corrector method.

**17.** Method according to claim 16, wherein the method is terminated by an abort condition.

**18.** Method according to claim 17, wherein the abort condition is satisfied when a predetermined number of operating points has been determined and/or a predetermined time limit has been reached.

**19.** Arrangement for designing a technical system for performing a method according to one of the preceding claims, having a processor unit which is set up such that

- the technical system comprises a predeterminable set of target functions which are dependent on parameters;
- each individual target function is weighted with a weighting factor;
- an equation system comprising the parameters and the weighting factors as variables in a variable space can be solved;
- the solutions of the equation system form operating points of a solution space in the variable space;
- the operating points can be determined by means of a predictor-corrector method in which, starting from a first operating point, a predictor which is generated by means of a stochastic variable is determined in the variable space and subsequently, in a corrector step, a second operating point is determined;
- the operating points can be used for designing the technical system.

**20.** Arrangement according to claim 19, comprising a random number generator for generating the stochastic variable.

**21.** Computer program product which has a storage medium on which is stored a computer program which is executable on a computer and by means of which the method according to one of the claims 1 to 18 can be performed.

**Revendications**

**1.** Procédé pour la conception d'un système technique,

- dans lequel le système technique comporte une quantité prédéfinie de fonctions cibles qui dépendent de paramètres ;
- dans lequel chaque fonction cible individuelle est pondérée avec un facteur de pondération ;
- dans lequel un système d'équations comprenant les paramètres et les facteurs de pondération sous forme de variables est résolu dans un espace de variables ;
- dans lequel les résolutions du système d'équations forment des points de travail d'un espace de résolution dans l'espace de variables ;
- dans lequel les points de travail sont définis au moyen d'une méthode de prédicteur-correcteur, dans laquelle un prédicteur, qui est généré au moyen d'une grandeur stochastique, est déterminé à partir d'un premier point de travail dans l'espace de variables et un second point de travail est déterminé ensuite dans une étape de correction ;
- dans lequel les points de travail sont utilisés pour la conception du système technique.

**2.** Procédé selon l'une quelconque des revendications précédentes, dans lequel le prédicteur est déterminé au moyen de nombres aléatoires.

**3.** Procédé selon l'une quelconque des revendications précédentes, dans lequel les nombres aléatoires font l'objet d'une distribution normale.

**4.** Procédé selon l'une quelconque des revendications précédentes, dans lequel la grandeur stochastique est un processus $Z_t$ stochastique qui répond à l'équation suivante :

$$dZ_t \;=\; \varepsilon\, P(Z_t)\, dB_t$$

avec laquelle

$P(z)$ est une matrice de projection sur l'espace tangentiel de l'espace de résolution au point de travail $z$ valable, $\varepsilon$ est un facteur de gradation, et

$B_t, t \in \Re_0^+$ est un mouvement brownien dans l'espace de variables.

**5.** Procédé selon l'une quelconque des revendications précédentes, dans lequel des points optimum de Pareto sont déterminés comme points de travail.

**6.** Procédé selon l'une quelconque des revendications précédentes, dans lequel les points de travail sont les points avec des facteurs de pondération positifs dans l'espace de résolution.

**7.** Procédé selon l'une quelconque des revendications précédentes, dans lequel les points de travail répondent à une ou plusieurs conditions annexes, la ou chaque condition annexe étant représentée par une autre variable du système d'équations dans l'espace de variables.

**8.** Procédé selon la revendication 7, dans lequel les conditions annexes sont des conditions annexes d'identité et/ou des conditions annexes de différence.

**9.** Procédé selon la revendication 8, dans lequel des conditions annexes de différence sont converties au moyen d'une variable de glissement en conditions annexes d'identité.

**10.** Procédé selon l'une quelconque des revendications précédentes, dans lequel l'espace de résolution est une variante, en particulier une sous-variante dans l'espace de variables.

**11.** Procédé selon l'une quelconque des revendications précédentes, dans lequel le premier point de travail est déterminé par une méthode de pondération.

**12.** Procédé selon l'une quelconque des revendications précédentes, dans lequel un plan tangentiel à l'espace de résolution est déterminé au premier point de travail et le prédicteur est défini dans ce plan tangentiel.

**13.** Procédé selon l'une quelconque des revendications précédentes, dans lequel, en cas d'apparition d'un prédicteur négatif, un nouveau prédicteur est déterminé avec un ou plusieurs facteurs de pondération négatifs par une réflexion sur un sous-plan de l'espace de résolution des points de travail.

**14.** Procédé selon la revendication 13, dans lequel

- un point d'intersection de la trajectoire, qui passe entre le premier point de travail et le prédicteur négatif, est déterminé avec le sous-plan de l'espace de résolution ;
- la partie tangentielle du vecteur sous-tendu par le point d'intersection et le prédicteur négatif sur un sous-plan de l'espace de résolution est déterminée, les facteurs de pondération, qui étaient négatifs pour le prédicteur négatif, étant égaux à zéro aux points du sous-plan ;
- la partie normale, spécifique à la partie tangentielle, du vecteur sous-tendu par le point d'intersection et le prédicteur négatif est déterminée ;
- le nouveau prédicteur est déterminé par une double soustraction de la partie normale du prédicteur négatif.

**15.** Procédé selon l'une quelconque des revendications précédentes, dans lequel la méthode de correction est un procédé de Newton.

**16.** Procédé selon l'une quelconque des revendications précédentes, dans lequel les points de travail sont déterminés par des itérations de la méthode de prédicteur-correcteur, le second point de travail de l'étape d'itération précédente étant utilisé dans une étape d'itération comme premier point de travail de la méthode de prédicteur-correcteur.

**17.** Procédé selon la revendication 16, le procédé étant achevé par une condition d'interruption.

**18.** Procédé selon la revendication 17, dans lequel la condition d'interruption est satisfaite lorsqu'un nombre prédéfini de points de travail a été déterminé et/ou une limite de temps prédéfinie a été atteinte.

**19.** Agencement pour la conception d'un système technique pour la mise en oeuvre d'un procédé selon l'une quelconque des revendications précédentes, comprenant une unité de processeur, qui est aménagée de telle sorte que

- le système technique comporte une quantité prédéfinissable de fonctions cibles qui dépendent de paramètres ;
- chaque fonction cible individuelle est pondérée avec un facteur de pondération ;
- un système d'équations comprenant les paramètres et les facteurs de pondération sous forme de variables peut être résolu dans un espace de variables ;
- les résolutions du système d'équation forment des points de travail d'un espace de résolution dans l'espace de variables ;
- les points de travail peuvent être déterminés au moyen d'une méthode de prédicteur-correcteur, dans laquelle un prédicteur, qui est généré au moyen d'une grandeur stochastique, est déterminé dans l'espace de variables à partir d'un premier point de travail et un second point de travail est déterminé ensuite dans une étape de correction ;
- les points de travail peuvent être utilisés pour la conception du système technique.

**20.** Agencement selon la revendication 19, comprenant un générateur de nombres aléatoires pour générer la grandeur stochastique.

**21.** Produit de programme informatique, qui présente un moyen de stockage sur lequel un programme informatique est stocké, lequel peut se dérouler sur un ordinateur et avec lequel le procédé peut être mis en oeuvre selon l'une quelconque des revendications 1 à 18.

**FIG 1**

Beschreibungsform eines techn. Systems — 101

Bestimmung eines ersten Pareto-optimalen Punktes Z — 102

Bestimmung einer Targentialebene $T_Z M$ — 103

Bestimmung eines Prädiktors y — 104

Bestimmung eines neuen gültigen Arbeitspunktes in einem Korrektorschritt — 105

106
Abbruchbed. erfüllt?

nein

ja

Beschränkung auf Pareto-optimale Punkte mit positiven $\alpha_i$ — 107

Auswahl eines effizienten Arbeitspunktes

FIG 2

$T_{Z^i}M$

$y^{i+1}$

104

105

$z^i$

$z^{i+1}$

M

FIG 3

$y_{neg}$

n

$x_{neg}$

S

$t = x_{neg} - n$

Unterebene mit
$\alpha_i = 0$

Z

$x_{neu} = x_{neg} - 2n$

$y_{neu}$

$T_Z M$

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9966434 A

**In der Beschreibung aufgeführte Nicht-Patentliteratur**

- **C. Hillermeier.** Nonlinear Multiobjective Optimization: A Generalized Homotopy Approach. Birkhäuser Verlag, 2001

- A Generalized Homotopy Approach to Multiobjective Optimization. **C. Hillermeier.** Journal of Optimization Theory and Application. Plenum Press, 2001, vol. 110/3, 557-583